# EUROPEAN PATENT SPECIFICATION

(11) **EP 4 362 286 B1**
(45) Date of publication and mention of the grant of the patent: **02.09.2026**
(21) Application number: 23206274.5
(22) Date of filing: 26.10.2023
(51) Int. Cl.: H02K 1/32, H02K 7/00, H02K 7/14, H02K 9/19, H02K 7/116

(54) **ELECTRIC DRIVE ASSEMBLY SYSTEM AND VEHICLE**
ELEKTRISCHES ANTRIEBSANORDNUNGSSYSTEM UND FAHRZEUG
SYSTÈME D'ENSEMBLE D'ENTRAÎNEMENT ÉLECTRIQUE ET VÉHICULE

(30) Priority: 31.10.2022 CN 202211350895
(43) Date of publication of application: 01.05.2024
(73) Proprietor: Valeo Electrification, 95892 Cergy Pontoise (FR)
(72) Inventor: CHU, Zhichao, Shanghai 201108 (CN); JIN, Ye Jin, Shanghai 201108 (CN); WANG, Wenhui, Shanghai 201108 (CN); ZHAO, Wanchao, Shanghai 201108 (CN); DENG, Xiaoxue, Shanghai 201108 (CN)
(74) Representative: Valeo Powertrain Systems

(56) References cited:
- CN-A- 112 769 268
- US-A1- 2017 133 912

## Description

### Technical Field

The present disclosure relates to an electric drive assembly system. The present disclosure further relates to a vehicle comprising such an electric drive assembly system.

### Background

The electric drive assembly system of a vehicle includes an electric motor used to drive the vehicle and a transmission component such as a gearbox. The motor shaft of the electric motor and the input shaft of the gearbox are rotationally coupled to transmit torque from the electric motor to the gearbox. In view of compactness and transmission efficiency, the electric motor and gearbox of the electric drive assembly system may be integrated together.

The electric motors used to drive vehicles usually have greater power and generate a large amount of heat when running continuously. If the heat dissipation is insufficient, the heat generated will accumulate inside the electric motor, causing the temperature of the electric motor to rise and affecting the reliability and performance of the electric motor. Oil-cooled electric motors can bring a cooling medium (cooling oil) into direct contact with the internal components of the electric motors, so they have a better cooling effect and are increasingly used in the vehicle field. Cooling oil is usually introduced to an oil-cooled electric motor through a motor shaft located at the axis centre of the electric motor, and a centrifugal force generated when the electric motor rotates causes the cooling oil to be sprayed radially outward to cool various components of the electric motor.

The windings of the stator are a major heat-generating component of the electric motor and generally include ends extending beyond the stator body at both axial ends of the electric motor. Therefore, it is desired that the cooling oil entering the electric motor can be sprayed directly to the windings of the stator at both axial ends of the electric motor to cool the windings. However, due to the constraints of other factors, in an integrated electric drive assembly system, the coupling area between the motor shaft of the electric motor and the input shaft of the gearbox usually also needs to be arranged at the axial end of the electric motor close to the gearbox, so that the coupling area coincides with the ends of the windings extending beyond the stator body in the axial direction. This creates an obstacle to the flow of cooling oil from the axial ends to the stator windings. In order to avoid the connection area, it is known to drill holes in the end plates of the rotor of the electric motor for spraying cooling oil. However, in order to enable cooling oil to be sprayed to the ends of the stator windings, the holes drilled in the end plates need to be inclined. This greatly increases the difficulty of end plate machining.

The document US 2017/133912 A1 discloses a machine with an oil supply passage in the shaft.

Therefore, there is a need for an electric drive assembly system in which cooling oil can flow through the coupling area between the motor shaft of the electric motor and the input shaft of the gearbox to fully cool the stator windings of the electric motor.

### Summary of the Invention

In view of the problems and demands mentioned above, the present disclosure proposes a new type of electric drive assembly system and a vehicle, which solve the above problems and bring about other technical effects by adopting the following technical features.

An electric drive assembly system according to the present disclosure comprises: an electric motor comprising a motor shaft rotating about an axis of rotation, and a gearbox coupled to the electric motor, the gearbox comprising an input shaft rotationally coupled with the motor shaft. A circumferential groove is provided at the coupling area of the motor shaft and the input shaft, the motor shaft comprises a first radial through-hole in fluid communication with the circumferential groove, and the input shaft comprises a second radial through-hole in fluid communication with the circumferential groove. The first radial through-hole and the second radial through-hole are located on both radial sides of the circumferential groove, respectively.

An objective of the present disclosure is to provide an electric drive assembly system in which cooling oil can flow through the coupling area between the motor shaft of the electric motor and the input shaft of the gearbox to fully cool the stator windings of the electric motor. The electric drive assembly system according to the present disclosure comprises the circumferential groove provided at the coupling area, and the first and second radial through-holes in fluid communication with the circumferential groove and respectively located on both radial sides of the circumferential groove. Thus, the cooling oil can pass through the coupling area of the motor shaft and the input shaft through the first and second radial through-holes and the circumferential groove, and flow toward the end of the stator winding under the action of centrifugal force, so that the stator windings of the electric motor are fully cooled.

The electric drive assembly system according to the present disclosure may further have one or more of the following features individually or in combination.

According to an embodiment of the present disclosure, the coupling area includes a plurality of circumferential grooves spaced apart from each other in the axial direction. Correspondingly, the motor shaft of the electric motor comprises a plurality of first radial through-holes in fluid communication with the plurality of circumferential grooves, and the input shaft of the gearbox comprises a plurality of second radial through-holes in fluid communication with the plurality of circumferential grooves. The number of circumferential grooves may be adjusted according to a required cooling oil flow rate.

According to an embodiment of the present disclosure, the coupling area is a coupling area of a first coupling member of the motor shaft and a second coupling member of the input shaft. That is to say, the mutual coupling of the first coupling member and the second coupling member realizes the coupling of the motor shaft and the input shaft.

According to an embodiment of the present disclosure, the first coupling member and the second coupling member are a first spline and a second spline, respectively, and the first spline and the second spline mesh with each other, coupling the motor shaft and the input shaft to each other. The coupling area of the motor shaft and the input shaft is a meshing area of the first spline and the second spline, and the torque transmission from the motor shaft to the input shaft is achieved through the meshed first spline and second spline.

According to an embodiment of the present disclosure, the circumferential groove is provided at the first coupling member and/or the second coupling member.

According to an embodiment of the present disclosure, in the coupling area, the motor shaft is located radially outside the input shaft in the coupling area, the first spline of the motor shaft is an internal spline, and the second spline of the input shaft is an external spline. According to the above features, the motor shaft is sleeved on the input shaft.

According to an embodiment of the present disclosure, the motor shaft is located radially inside the input shaft in the coupling area, the first spline of the motor shaft is an external spline, and the second spline of the input shaft is an internal spline. According to the above features, the input shaft is sleeved on the motor shaft.

According to an embodiment of the present disclosure, the first radial through-hole and the second radial through-hole are aligned with each other, or the first radial-through hole and the second radial through-hole are staggered from each other by a predetermined angle. When the first radial through-hole and the second radial through-hole are aligned with each other, the cooling oil flows more smoothly, so that a greater cooling oil flow rate can be obtained. When the first radial through-hole and the second radial through-hole are staggered from each other by a predetermined angle, the cooling oil needs to flow circumferentially through the above predetermined angle in the circumferential groove so as to flow between the first and second radial through-holes, Therefore, the flow resistance is larger, and it is suitable for situations where the cooling oil flow rate is smaller.

According to an embodiment of the present disclosure, the first radial through hole and the second radial through-hole have the same or different diameters.

According to an embodiment of the present disclosure, the motor shaft comprises a plurality of first radial through-holes evenly distributed along the circumferential direction, and/or the input shaft comprises a plurality of second radial-through holes evenly distributed along the circumferential direction.

According to an embodiment of the present disclosure, the number of the first radial through-holes is equal to the number of the second radial through-holes, or the number of the first radial through-holes is different from the number of the second radial through-holes.

According to an embodiment of the present disclosure, the circumferential groove is an annular groove. That is to say, the circumferential groove surrounds the entire circumference of the coupling area.

The present disclosure further relates to a vehicle comprising the electric drive assembly system as described above.

### Brief Description of the Drawings

The foregoing and other features and advantages of the present disclosure will become more apparent from the following detailed description of exemplary embodiments with reference to the accompanying drawings, and the description and the accompanying drawings are for illustrative purposes only and are not intended to limit the scope of the present disclosure in any way. The following accompanying drawings are not intended to be drawn in equal scaling according to actual size, and the focus is on showing the gist of the present disclosure.
FIG. 1 shows a partial cross-sectional view of an electric drive assembly system according to the present disclosure.
FIG. 2 shows a cross-sectional view of a coupling area of a motor shaft of an electric motor and an input shaft of a gearbox according to the present disclosure.
FIGS. 3A and 3B show a first coupling member of the motor shaft and a second coupling member of the input shaft, respectively.
FIG. 4 shows a cross-sectional view of the coupling area taken in a direction perpendicular to an axis of rotation X.

### Detailed Description of the Invention

In order to clarify the objective, technical solution and advantages of embodiments of the present disclosure, the technical solution of embodiments of the present disclosure is described clearly and completely below in conjunction with the drawings accompanying embodiments of the present disclosure.

Unless otherwise defined, technical terms or scientific terms used herein shall have the common meanings understood by those skilled in the art. "One", "a" or "said" and similar words used in the description and claims of the patent application of the present disclosure do not indicate a quantity limit, but mean that there is at least one. "Comprise" or "include" and similar words mean that the element or object appearing before the word encompasses the elements or objects and their equivalents listed after the word. "Connected" or "coupled" and similar words are not limited to a physical or mechanical connection, and may include an electrical connection, whether direct or indirect. "Upper", "lower", "left", "right", etc. are only used to indicate a relative positional relationship, and when the absolute position of the described object changes, the relative positional relationship might also change accordingly. The terms "axial" and "axial direction" refer to the direction of the axis of rotation X of the electric motor.

In order to facilitate description, the drawings of the present disclosure accordingly simplify or omit components commonly used in the art, such as external connection lines and other components that are irrelevant to the description of the present disclosure. These omitted or simplified components do not affect the understanding of the present disclosure by a person skilled in the art.

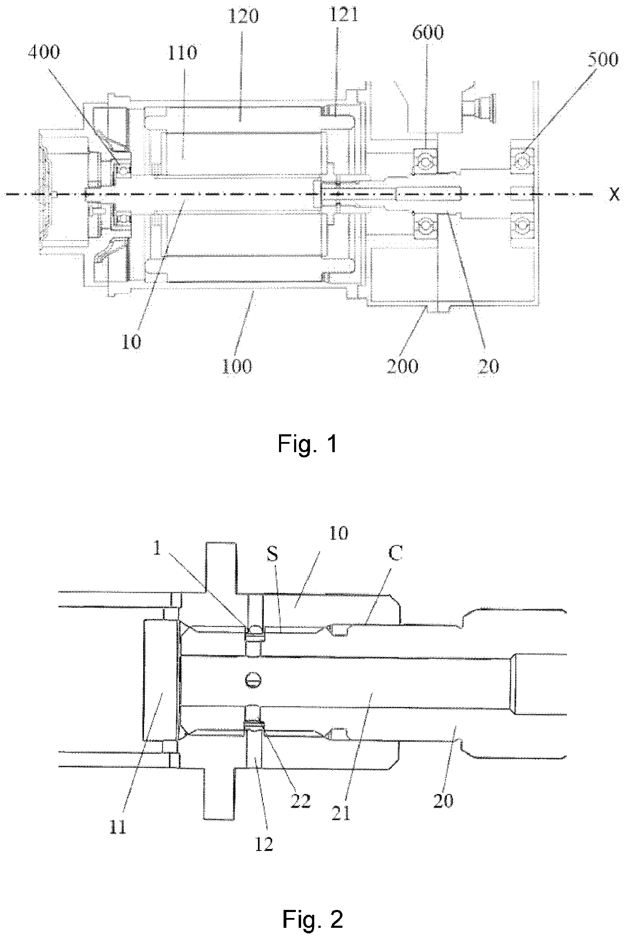

FIG. 1 shows a partial cross-sectional view of an electric drive assembly system according to an exemplary embodiment of the present disclosure.

As shown in FIG. 1, the electric drive assembly system includes an electric motor 100 and a gearbox 200. The electric motor 100 includes a rotor 110 and a stator 120. The motor shaft 10 is located at the axis centre of the rotor 110 and rotates about an axis of rotation X together with the rotor 110. The gearbox 200 is integrated with the electric motor 100 and coupled to the electric motor 100. Specifically, the gearbox 200 includes an input shaft 20 that is coaxial with the motor shaft 10 of the electric motor 100, and is rotationally coupled with the motor shaft 10 so that relative rotation does not occur between the motor shaft 10 and the input shaft 20. In other words, the rotation of the motor shaft 10 about the axis of rotation X drives the input shaft 20 to rotate about the axis of rotation X, thereby realizing torque transmission from the electric motor 100 to the gearbox 200.

In the shown embodiment, the motor shaft 10 includes two axial ends. As shown in FIG. 1, one of the two axial ends may be supported by a first bearing 400, and the first bearing 400 may be provided on a housing of the electric drive assembly system.

Please continue to refer to FIG. 1. The input shaft 20 includes two axial ends. One of the two axial ends may be supported by a second bearing 500. The second bearing 500 may be provided on the housing of the electric drive assembly system.

In addition, a third bearing 600 may also be provided. As shown in FIG. 1, the third bearing 600 may support the other of the two axial ends of the input shaft 20.

In some specific embodiments, at least one of the first bearing 400, the second bearing 500 and the third bearing 600 is a deep groove ball bearing.

The rotational coupling of the motor shaft 10 and the input shaft 20 is achieved by coupling a first coupling member of the motor shaft 10 and a second coupling member of the input shaft 20 to each other. The coupling area of the first coupling member and the second coupling member is provided at an axial end of the electric motor 100. Referring to the embodiment shown in FIGS. 2-3B, the motor shaft 10 includes a first central hole 11, and a first spline 13 is provided at a middle position of the first central hole 11 to form the first coupling member of the motor shaft 10. The input shaft 20 is provided with a second spline 23 on the outer surface of an end thereof, forming the second coupling member of the input shaft 20. In an assembled configuration, the input shaft 20 is inserted into the first central hole 11 of the motor shaft 10, and the second spline 23 and the first spline 13 mesh with each other, thereby rotationally coupling the motor shaft 10 and the input shaft 20 together. The meshing area of the second spline 23 and the first spline 13 forms the coupling area of the motor shaft 10 and the input shaft 20.

Referring to FIGS. 1-3, the first spline 13 of the motor shaft 10 is an internal spline, and the second spline 23 of the input shaft 20 is an external spline. At the coupling area of the motor shaft 10 and the input shaft 20, the motor shaft 10 is sleeved on the input shaft 20 radially outward. It is conceivable that the input shaft 20 may also be configured with a central hole allowing the motor shaft 10 to be inserted, the second spline 23 is configured as an internal spline located at the central hole, and the first spline 13 of the motor shaft 10 is configured as an external spline at the outer surface of the motor shaft 10, so that the input shaft 20 is located radially outside the motor shaft 10 in the coupling area.

Referring to FIG. 2, the coupling between the motor shaft 10 and the input shaft 20 may specifically include a spline coupling part S and a radial centring part C, and be axially located between the axial ends of one of the third bearing 600 and the input shaft 20. The radial centring part C and the spline coupling part S are axially arranged adjacent to each other. Such a structure allows the corresponding radial centring part and spline coupling part to be conveniently machined on the motor shaft 10 and the input shaft 20, and helps to simplify the assembling between the motor shaft 10 and the input shaft 20, thereby reducing the design, manufacturing and assembly costs, and increasing cost effectiveness.

In some embodiments, the radial centring part C is axially provided between the spline coupling part S and the third bearing 600. In some embodiments, the spline coupling part S is axially provided between the radial centring part C and the third bearing 600.

Referring to FIG. 2, the radial centring part C includes a radial outer surface of the motor shaft 10, and a radial inner surface of the input shaft 20 which is in a clearance fit with the radial outer surface. Such a radial centring part C is able to ensure proper centring, is very easy to machine, and facilitates assembly, further increasing cost effectiveness. In some embodiments, the radial inner surface of the input shaft 20 forming the radial centring part C may be formed on an annular protrusion. In some embodiments, the radial outer surface of the motor shaft 10 forming the radial centring part C may be formed on an annular protrusion. Thus, in both of the designs described above, the centring part C is formed of a structure that is easy to machine, reducing the design, machining and assembly costs. Of course, such designs of the radial centring part are merely exemplary and not exclusive; all common structures capable of achieving radial centring of the motor shaft and input shaft are included in the scope of protection of the present invention.

Cooling oil circulates in the electric drive assembly system. The cooling oil may cool various parts of the electric motor 100, and may also cool and/or lubricate the gearbox 200. The flow path of the cooling oil between the electric motor 100 and the gearbox 200 is defined by the input shaft 20 and the motor shaft 10. When the cooling oil flows, the electric motor 100 is usually located downstream of the gearbox 200, that is, the cooling oil enters the electric motor 100 from the input shaft 20 of the gearbox 200 through the motor shaft 10 of the electric motor 100. Referring to FIGS. 1 and 2, the input shaft 20 may be provided with a second central hole 21 from which the cooling oil flows into the first central hole 11 of the motor shaft 10. Then, the cooling oil is sprayed from the motor shaft 10 in the radial direction under the driving of centrifugal force and reaches various components of the electric motor 100 to cool them.

Among the various components of the electric motor 100, the stator 120 includes a winding 121 in which a relatively large alternating current flows, for generating an alternating magnetic field that drives the rotor 110 to rotate. Therefore, the winding 121 of the stator 120 is one of the main heat-generating components of the electric motor 100. As shown in FIG. 1, the winding 121 includes ends that extend beyond the main body of the stator 120. When cooling the winding 121, it is preferable to spray the cooling oil directly to the end of the winding 121 in the radial direction, and then flow in the axial direction to cool the entire winding 121.

However, as shown in FIG. 1, at the axial end of the electric motor 100 close to the gearbox 200, the end of the winding coincides with the coupling area of the motor shaft 10 and the input shaft 20 in the radial direction. The cooling oil must first pass through the coupling area before it can be sprayed onto the end of the winding 121. To this end, the electric drive assembly system according to the present disclosure is provided with a passage for the cooling oil to pass at the coupling area of the motor shaft 10 and the input shaft 20.

Referring to FIGS. 2-4, the coupling area between the motor shaft 10 and the input shaft 20 is provided with a circumferential groove 1, the motor shaft 10 is provided with a first radial through-hole 12 in fluid communication with the circumferential groove 1, and the input shaft 20 includes a second radial through-hole 22 in fluid communication with the circumferential groove 1. The second radial through-hole 22, the circumferential groove 1 and the first radial through-hole 12 form a passage for the cooling oil to pass through the coupling area.

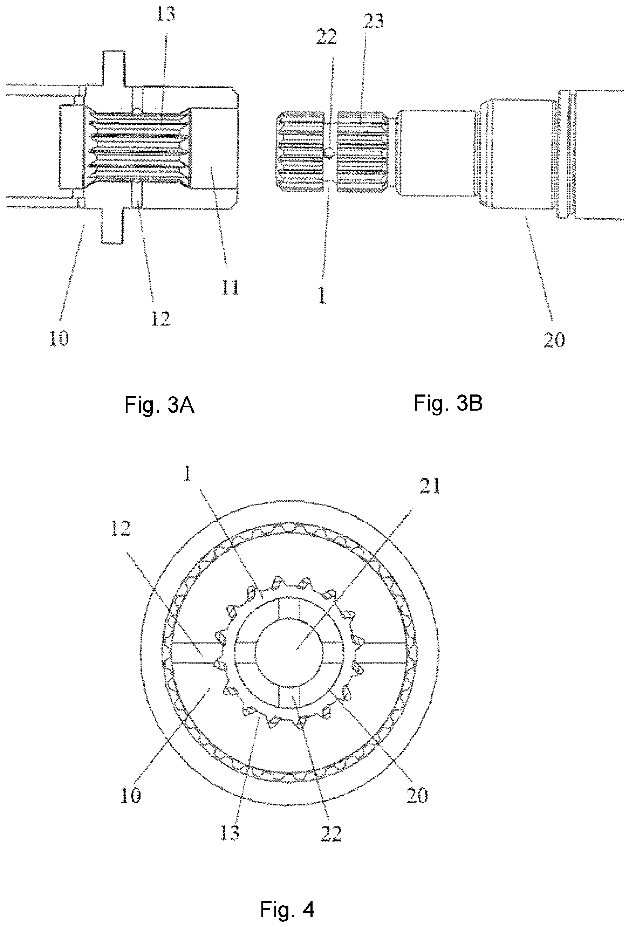

In the embodiments shown in the figures, the circumferential groove 1 is provided at the second spline 23 of the input shaft 20. The circumferential groove 1 is an annular groove completely surrounding the input shaft 20. Optionally, the circumferential groove 1 may also be an intermittent arc-shaped groove. As shown in FIG. 3B, the input shaft 20 includes a circumferential groove 1 dividing the second spline 23 into two parts. It is conceivable that a plurality of axially spaced circumferential grooves 1 may also be provided at the second splines 23 of the input shaft 20. The second radial through-hole 22 fluidly communicates the second central hole 21 with the circumferential groove 1, and the cooling oil may enter the circumferential groove 1 through the second radial through-hole 22. It is shown in FIG. 4 that the input shaft 20 includes four second radial through-holes 22 evenly distributed along the circumferential direction. The number of the second radial through-holes 22 may also be adjusted as needed.

The cooling oil entering the circumferential groove 1 may be directly sprayed outward through the first radial through-hole 12 of the motor shaft 10 to the end of the winding 121. It is shown in FIG. 4 that the motor shaft 10 includes two first radial through-holes 12, that is, the number of first radial through-holes 12 and the number of second radial through-holes 22 are different. It is conceivable that different numbers of first radial through-holes 12 may also be provided, and the number of first radial through-holes 12 and the number of second radial through-holes 22 may be provided to be the same. The diameter of the first radial through-hole 12 and the diameter of the second radial through-hole 22 may also be set to be the same or different from each other.

Furthermore, FIG. 4 shows that the first radial through-hole 12 is aligned with the second radial through-hole 22. Since the circumferential groove 1 is provided in the coupling area of the motor shaft 10 and the input shaft 20, the first radial through-hole 12 and the second radial through-hole 22 may also be staggered from each other. The cooling oil may flow in the circumferential groove 1 along the circumferential direction at a certain angle and then enter the first radial through-hole 12. Therefore, it is no longer necessary to align the first radial through-hole 12 and the second radial through-hole 22 when the motor shaft 10 and the input shaft 20 are assembled, reducing the difficulty of assembly. Of course, the first radial through-hole 12 and the second radial through-hole 22 may also be staggered from each other by a predetermined angle, thereby adjusting the flow resistance of the sprayed cooling oil.

In addition to being sprayed from the first radial through-hole 12 to the end of the winding 121, the cooling oil entering the circumferential groove 1 may also flow axially along the coupling area of the motor shaft 10 and the input shaft 20. For example, a part of the cooling oil flows axially along the gap between the first spline 13 of the motor shaft 10 and the second spline 23 of the input shaft 20, so that it can cool the meshing area between the first spline 13 and the second spline 23, and can also lubricate the meshing area.

FIGS. 2 to 4 show an embodiment in which the circumferential groove 1 is provided on the second coupling member of the input shaft 20. It is conceivable that the circumferential groove 1 may also be provided on the first coupling member of the motor shaft 10. For example, the circumferential groove 1 is provided at the first spline 13 of the motor shaft 10.

In addition to directing the cooling oil to spray through the coupling area to the end of the winding 121 close to the gearbox 200, the electric drive assembly system according to the present disclosure can also direct the cooling oil to spray through the rotor 110 toward the other end of the winding 121.

According to another aspect of the present disclosure, a vehicle is provided. The vehicle includes an electric drive assembly system as previously described. The vehicle may be an electrified vehicle, such as a battery electric vehicle (BEV), a hybrid electric vehicle (HEV), a plug-in hybrid electric vehicle (PHEV), a range extended EV and a fuel cell electric vehicle (FCEV). The vehicle may also be a hydrogen-powered vehicle.

Certain features, structures or characteristics in one or more embodiments of the present disclosure may be combined appropriately.

The above is a description of the present disclosure and should not be considered a limitation thereof. Although several exemplary embodiments of the present disclosure have been described, a person skilled in the art shall easily understand that many modifications can be made to the exemplary embodiments without departing from the novel teaching and advantages of the present disclosure. Therefore, all such modifications are intended to be included in the scope of the present disclosure as defined by the claims. It should be understood that the above is a description of the present disclosure and that the present disclosure should not be considered as being limited to the specific embodiments disclosed, and modifications to the disclosed embodiments and other embodiments are intended to be included within the scope of the present disclosure.

## Claims

1. An electric drive assembly system, comprising:
an electric motor (100) comprising a motor shaft (10) rotating about an axis of rotation (X),
a gearbox (200) coupled to the motor (100), the gearbox (200) comprises an input shaft (20) rotationally coupled with the motor shaft (10),
wherein a circumferential groove (1) is provided at the coupling area of the motor shaft (10) and the input shaft (20), the motor shaft (10) comprises a first radial through-hole (12) in fluid communication with the circumferential groove (1), and the input shaft (20) comprises a second radial through-hole (22) in fluid communication with the circumferential groove (1), the first radial through hole (12) and the second radial through hole (22) are respectively located on both radial sides of the circumferential groove (1).

2. The electric drive assembly system of claim 1, wherein the coupling area includes a plurality of circumferential grooves (1) spaced apart from each other in the axial direction.

3. The electric drive assembly system of claim 1, wherein the coupling area is the coupling area of a first coupling member of the motor shaft (10) and a second coupling member of the input shaft (20).

4. The electric drive assembly system of claim 3, wherein the first coupling member and the second coupling member are respectively a first spline (13) and a second spline (23), and the first spline (13) and the second spline (23) mesh with each other, coupling the motor shaft (10) and the input shaft (20) to each other.

5. The electric drive assembly system of claim 3, wherein the circumferential groove (1) is provided at the first coupling part and/or the second coupling part.

6. The electric drive assembly system of claim 4, wherein the motor shaft (10) is located radially outside the input shaft (20) in the coupling area, the first spline (13) of the motor shaft (10) is an internal spline, and the second spline (23) of the input shaft (13) is an external spline.

7. The electric drive assembly system of claim 4, wherein the motor shaft (10) is located radially inside the input shaft (20) in the coupling area, the first spline (13) of the motor shaft (10) is an external spline, and the second spline (23) of the input shaft (13) is an internal spline.

8. The electric drive assembly system of claim 1, wherein the first radial through-hole (12) and the second radial through-hole (22) are aligned with each other, or the first radial-through hole (12) and the second radial through-hole (22) are staggered from each other by a predetermined angle.

9. The electric drive assembly system of claim 1, wherein The first radial through hole (12) and the second radial through-hole (22) have the same or different diameters.

10. The electric drive assembly system of claim 1, wherein the motor shaft (10) includes a plurality of first radial through-holes (12) evenly distributed along the circumferential direction, and/or the input shaft (20) includes a plurality of second radial-through holes (22) evenly distributed along the circumferential direction.

11. The electric drive assembly system of claim 10, wherein the number of the first radial through-holes (12) is equal to the number of the second radial through-holes (22), or the number of the first radial through-holes (12) is different from the number of the second radial through-holes (22).

12. The electric drive assembly system of claim 1, wherein the circumferential groove (1) is an annular groove.

13. A vehicle, **characterized in that** the vehicle comprises the electric drive assembly system according to any one of claims 1 to 12.

## Patentansprüche

1. Elektrisches Antriebsaggregatsystem, umfassend: einen Elektromotor (100), der eine Motorwelle (10) umfasst, die sich um eine Rotationsachse (X) dreht, ein Getriebe (200), das mit dem Motor (100) gekoppelt ist, wobei das Getriebe (200) eine Eingangswelle (20) umfasst, die drehbar mit der Motorwelle (10) gekoppelt ist, wobei dass eine Umfangsnut (1) im Kopplungsbereich der Motorwelle (10) und der Eingangswelle (20) vorgesehen ist, die Motorwelle (10) eine erste radiale Durchgangsbohrung (12) umfasst, die in Fluidverbindung mit der Umfangsnut (1) steht, und die Eingangswelle (20) eine zweite radiale Durchgangsbohrung (22) umfasst, die in Fluidverbindung mit der Umfangsnut (1) steht, wobei die erste radiale Durchgangsbohrung (12) und die zweite radiale Durchgangsbohrung (22) jeweils auf beiden radialen Seiten der Umfangsnut (1) angeordnet sind.

2. Elektrisches Antriebsaggregatsystem nach Anspruch 1, wobei der Kopplungsbereich eine Vielzahl von Umfangsnuten (1) umfasst, die in axialer Richtung voneinander beabstandet sind.

3. Elektrisches Antriebsaggregatsystem nach Anspruch 1, wobei der Kopplungsbereich der Kopplungsbereich eines ersten Kopplungselements der Motorwelle (10) und eines zweiten Kopplungselements der Eingangswelle (20) ist.

4. Elektrisches Antriebsaggregatsystem nach Anspruch 3, wobei das erste Kopplungselement und das zweite Kopplungselement jeweils eine erste Verzahnung (13) und eine zweite Verzahnung (23) sind, und die erste Verzahnung (13) und die zweite Verzahnung (23) miteinander kämmen, wodurch die Motorwelle (10) und die Eingangswelle (20) miteinander gekoppelt werden.

5. Elektrisches Antriebsaggregatsystem nach Anspruch 3, wobei die Umfangsnut (1) am ersten Kopplungsteil und/oder am zweiten Kopplungsteil vorgesehen ist.

6. Elektrisches Antriebsaggregatsystem nach Anspruch 4, wobei die Motorwelle (10) im Kopplungsbereich radial außerhalb der Eingangswelle (20) angeordnet ist, die erste Verzahnung (13) der Motorwelle (10) eine Innenverzahnung ist und die zweite Verzahnung (23) der Eingangswelle (13) eine Außenverzahnung ist.

7. Elektrisches Antriebsaggregatsystem nach Anspruch 4, wobei die Motorwelle (10) im Kopplungsbereich radial innerhalb der Eingangswelle (20) angeordnet ist, die erste Verzahnung (13) der Motorwelle (10) eine Außenverzahnung ist und die zweite Verzahnung (23) der Eingangswelle (13) eine Innenverzahnung ist.

8. Elektrisches Antriebsaggregatsystem nach Anspruch 1, wobei die erste radiale Durchgangsbohrung (12) und die zweite radiale Durchgangsbohrung (22) miteinander ausgerichtet sind, oder die erste radiale Durchgangsbohrung (12) und die zweite radiale Durchgangsbohrung (22) um einen vorbestimmten Winkel zueinander versetzt sind.

9. Elektrisches Antriebsaggregatsystem nach Anspruch 1, wobei die erste radiale Durchgangsbohrung (12) und die zweite radiale Durchgangsbohrung (22) gleiche oder unterschiedliche Durchmesser aufweisen.

10. Elektrisches Antriebsaggregatsystem nach Anspruch 1, wobei die Motorwelle (10) eine Vielzahl von ersten radialen Durchgangsbohrungen (12) umfasst, die gleichmäßig in Umfangsrichtung verteilt sind, und/oder die Eingangswelle (20) eine Vielzahl von zweiten radialen Durchgangsbohrungen (22) umfasst, die gleichmäßig in Umfangsrichtung verteilt sind.

11. Elektrisches Antriebsaggregatsystem nach Anspruch 10, wobei die Anzahl der ersten radialen Durchgangsbohrungen (12) gleich der Anzahl der zweiten radialen Durchgangsbohrungen (22) ist, oder die Anzahl der ersten radialen Durchgangsbohrungen (12) von der Anzahl der zweiten radialen Durchgangsbohrungen (22) verschieden ist.

12. Elektrisches Antriebsaggregatsystem nach Anspruch 1, wobei die Umfangsnut (1) eine Ringnut ist.

13. Fahrzeug, **dadurch gekennzeichnet, dass** das Fahrzeug das elektrische Antriebsaggregatsystem nach einem der Ansprüche 1 bis 12 umfasst.

## Revendications

1. Système d'ensemble d'entraînement électrique, comprenant : un moteur électrique (100) comprenant un arbre moteur (10) tournant autour d'un axe de rotation (X), une boîte de vitesses (200) couplée au moteur (100), la boîte de vitesses (200) comprend un arbre d'entrée (20) couplé en rotation avec l'arbre moteur (10), dans lequel une rainure circonférentielle (1) est prévue au niveau de la zone de couplage de l'arbre moteur (10) et de l'arbre d'entrée (20), l'arbre moteur (10) comprend un premier trou traversant radial (12) en communication fluidique avec la rainure circonférentielle (1), et l'arbre d'entrée (20) comprend un second trou traversant radial (22) en communication fluidique avec la rainure circonférentielle (1), le premier trou traversant radial (12) et le second trou traversant radial (22) sont respectivement situés sur les côtés radiaux de la rainure circonférentielle (1).

2. Système d'ensemble d'entraînement électrique selon la revendication 1, dans lequel la zone de couplage comprend une pluralité de rainures circonférentielles (1) espacées les unes des autres dans la direction axiale.

3. Système d'ensemble d'entraînement électrique selon la revendication 1, dans lequel la zone de couplage est la zone de couplage d'un premier élément de couplage de l'arbre moteur (10) et d'un second élément de couplage de l'arbre d'entrée (20).

4. Système d'ensemble d'entraînement électrique selon la revendication 3, dans lequel le premier élément de couplage et le second élément de couplage sont respectivement une première cannelure (13) et une seconde cannelure (23), et la première cannelure (13) et la seconde cannelure (23) s'engrènent l'une avec l'autre, couplant l'arbre moteur (10) et l'arbre d'entrée (20) l'un à l'autre.

5. Système d'ensemble d'entraînement électrique selon la revendication 3, dans lequel la rainure circonférentielle (1) est prévue au niveau de la première partie de couplage et/ou de la seconde partie de couplage.

6. Système d'ensemble d'entraînement électrique selon la revendication 4, dans lequel l'arbre moteur (10) est situé radialement à l'extérieur de l'arbre d'entrée (20) dans la zone de couplage, la première cannelure (13) de l'arbre moteur (10) est une cannelure interne, et la seconde cannelure (23) de l'arbre d'entrée (13) est une cannelure externe.

7. Système d'ensemble d'entraînement électrique selon la revendication 4, dans lequel l'arbre moteur (10) est situé radialement à l'intérieur de l'arbre d'entrée (20) dans la zone de couplage, la première cannelure (13) de l'arbre moteur (10) est une cannelure externe, et la seconde cannelure (23) de l'arbre d'entrée (13) est une cannelure interne.

8. Système d'ensemble d'entraînement électrique selon la revendication 1, dans lequel le premier trou traversant radial (12) et le second trou traversant radial (22) sont alignés l'un avec l'autre, ou le premier trou traversant radial (12) et le second trou traversant radial (22) sont décalés l'un par rapport à l'autre d'un angle prédéterminé.

9. Système d'ensemble d'entraînement électrique selon la revendication 1, dans lequel le premier trou traversant radial (12) et le second trou traversant radial (22) ont des diamètres identiques ou différents.

10. Système d'ensemble d'entraînement électrique selon la revendication 1, dans lequel l'arbre moteur (10) comprend une pluralité de premiers trous traversants radiaux (12) répartis uniformément dans la direction circonférentielle, et/ou l'arbre d'entrée (20) comprend une pluralité de seconds trous traversants radiaux (22) répartis uniformément dans la direction circonférentielle.

11. Système d'ensemble d'entraînement électrique selon la revendication 10, dans lequel le nombre de premiers trous traversants radiaux (12) est égal au nombre de seconds trous traversants radiaux (22), ou le nombre de premiers trous traversants radiaux (12) est différent du nombre de seconds trous traversants radiaux (22).

12. Système d'ensemble d'entraînement électrique selon la revendication 1, dans lequel la rainure circonférentielle (1) est une rainure annulaire.

13. Véhicule, **caractérisé en ce que** le véhicule comprend le système d'ensemble d'entraînement électrique selon l'une quelconque des revendications 1 à 12.
